(19) Europäisches Patentamt / European Patent Office / Office européen des brevets

(11) **EP 2 057 512 B1**

(12) **EUROPEAN PATENT SPECIFICATION**

(45) Date of publication and mention of the grant of the patent:
**18.09.2013 Bulletin 2013/38**

(51) Int Cl.:
***G05B 13/04*** *(2006.01)*

(21) Application number: **07811530.0**

(22) Date of filing: **24.08.2007**

(86) International application number:
**PCT/US2007/018759**

(87) International publication number:
**WO 2008/024479 (28.02.2008 Gazette 2008/09)**

(54) **METHOD FOR MODEL GAIN MATRIX MODIFICATION**

VERFAHREN ZUR MODELLVERSTÄRKUNGSMATRIXMODIFIKATION

PROCÉDÉ DE MODIFICATION DE MATRICE DE GAIN MODÈLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.08.2006 US 839688 P**

(43) Date of publication of application:
**13.05.2009 Bulletin 2009/20**

(73) Proprietor: **ExxonMobil Research and Engineering Company Annandale, NJ 08801-0900 (US)**

(72) Inventors:
• **HALL, Roger, S.**
  **Billings, MT 59102 (US)**

• **PETERSON, Tod, J.**
  **Herndon, VA 20171 (US)**
• **POTTORF, Trevor, S.**
  **Coppell, TX 75019 (US)**
• **PUNURU, Adi, R.**
  **Oak Hill, VA 20171 (US)**
• **VOWELL, Lewis, E.**
  **Billings, MT 59105 (US)**

(74) Representative: **Wall, Leythem**
**ExxonMobil Chemical Europe Inc.**
**P.O. Box 105**
**1830 Machelen (BE)**

(56) References cited:
**WO-A2-2004/086155      US-A1- 2005 075 737**
**US-A1- 2007 050 053      US-A1- 2007 078 529**
**US-A1- 2008 065 241      US-A1- 2008 065 242**

**Description**

BACKGROUND OF THE INVENTION

The present invention relates to a method for modifying model gain matrices. In particular, the present invention relates to model predictive process control applications, such as Dynamic Matrix Control (DMC or DMCplus) from Aspen Technology (See e.g. U.S. 4, 349, 869) or RMPCT from Honeywell (See e.g. U.S. 5, 351, 184) . It could also be used in any application that involves using a Linear Program to solve a problem that includes uncertainty (for example, planning and scheduling programs such as Aspen PIMS™) .

Multivariable models are used to predict the relationship between independent variables and dependent variables. For multivariable controller models, the independent variables are manipulated variables that are moved by the controller, and the controlled variables are potential constraints in the process. For multivariable controllers, the models include dynamic and steady-state relationships.

Most multivariable controllers have some kind of steady-state economic optimization imbedded in the software, using economic criteria along with the steady-state information from the model (model gains). This is a similar problem to planning and scheduling programs, such as Aspen PIMS, that use a linear program (LP) to optimize a process model matrix of gains between independent and dependent variables.

For process models, there is almost always some amount of uncertainty in the magnitude of the individual model relationships. When combined into a multivariable model, small modeling errors can result in large differences in the control / optimization solution. Skogestad, et al., describes the Bristol Relative Gain Array (RGA) to judge the sensitivity of a controller to model uncertainty. The RGA is a matrix of interaction measures for all possible single-input single-output pairings between the variables considered. He states that large RGA elements (larger than 5 or 10) "indicate that the plant is fundamentally difficult to control due to strong interactions and sensitivity to uncertainty." For a given square model matrix G, the RGA is a matrix defined by

$$RGA(G) = Gx(G^{-1})^T$$

where x denotes element by element multiplication (Schur product). In the general case, the model G can be dynamic transfer functions. For the purposes of explaining this invention we only consider the steady-state behavior of the controller, and the model G is only a matrix of model gains, but the invention not intended to be so limited.

Two main approaches for dealing with these sensitivity problems (indicated by large RGA elements) are possible. One approach is to explicitly account for model uncertainty in the optimization step (See e.g. U.S. 6, 381, 505) . Another approach is to make small changes to the model, ideally within the range of uncertainty, to improve the RGA elements. The present invention is a process for implementing the second approach.

Current manual methods for model gain manipulation present some difficulties. Typically the user will focus on individual 2 x2 "problem" sub-matrices within the overall larger matrix that have RGA elements above a target threshold. The user can change the gains in a given "problem" sub-matrix to either force collinearity (make the sub-matrix singular) or spread the gains to make the sub-matrix less singular. Applying this process sequentially to all problem sub-matrices is very time-consuming due to the iterative nature of the work process. Depending on the density of the overall matrix, changing one gain in the matrix may affect many 2x2 sub-matrices. In other words, improving (decreasing) the RGA elements for one 2x2 sub-matrix may cause RGA elements in another 2x2 sub-matrix to become worse (increase). Often after one round of repairing problem sub-matrices, sub-matrices which had elements below the target threshold will now have RGA elements above the target value. Additional iterations of gain manipulation need to be done without reversing the fixes from the previous iterations. This often forces the user to make larger magnitude gain changes than desired or necessary.

It is also possible to automate the manual process described above. A computer algorithm can be written to automate the manual method using a combination of available and custom software. Typically, such a computer program will adjust the gains based on certain criteria to balance the need for accuracy relative to the input model and the extent of improvement in the RGA properties required. Optimization techniques can be employed to achieve this balance. These algorithms are iterative in nature, and can require extensive computing time to arrive at an acceptable solution. They may also be unable to find a solution which satisfies all criteria.

In practice, the modification of a matrix to improve its RGA properties is often neglected, resulting in relatively unstable behavior in the optimization solution, particularly if a model is being used to optimize a real process and model error is present.

WO 2004/086155 describes systematic methods to detect, verify and repair a collinear model. After detecting collinearity in a model or subsets of a model, a directional test is carried out to verify if the collinearity is mal. The model can then be adjusted in either direction making a near collinear model exactly collinear or less collinear, subject to model uncertainty bounds or other linear constraints. When doing the model adjustment, deviations from the original model are minimized and the directionality of the model is kept unchanged.

## SUMMARY OF THE INVENTION

The invention provides a computer program as claimed in claim 1. Preferred features of the invention are set out in the dependent claims.

The current invention relates to a technique for modifying model gain matrices. Specifically, the technique improves 2 x 2 sub-matrix Relative Gain Array elements that make up a larger model matrix. The technique involves taking the logarithm of the magnitude of each gain in a 2 x 2 sub-matrix, rounding it, and then reversing the logarithm to obtain a modified sub-matrix with better RGA properties. The base of the logarithm is adjusted to balance the relative importance of accuracy versus improvement in the RGA properties. As the base of the logarithm is increased, the RGA properties of the sub-matrix are improved but the magnitude of possible change is increased. The entire matrix, or the selected sub-matrix, is modified using the same (or related) logarithm base. This invention may be used for multivariable predictive control applications, such as multivariable predictive control applications selected from the group of DMCplus and RMPCT, among others. The multivariable predictive control may be applied to control manufacturing processes, such as those found in a petroleum refinery, a chemical plant, a power generation plant, including nuclear, gas or coal based, a paper manufacturing plant. Examples of petroleum refinery process units include at least one selected from the group of crude distillation unit, vaccuum distillation unit, naphtha reformer, naphtha hydrotreater, gasoline hydrotreater, kerosene hydrotreater, diesel hydrotreater, gas oil hydrotreater, hydrocracker, delayed coker, Fluid Coker, Flexicoker, steam reformer, sulfur plant, sour water stripper, boiler, water treatment plant and combinations of the above. Additionally, this invention may be used in conjunction with LP models, such as PIMS.

This invention greatly simplifies the process of modifying a model matrix to improve RGA properties. In general, all elements in the entire matrix are modified on the first iteration, and the resulting matrix is guaranteed to have no single 2 x 2 sub-matrix RGA element larger than the desired threshold. The invention is ideally suited for implementation via a computer algorithm, and therefore the time required to modify each sub-matrix and the overall matrix can be greatly reduced once the algorithm is generated.

The present invention includes the following:

1. The application of a logarithmic rounding technique to modify individual values in a matrix.

2. The technique for calculating the logarithm base to be used in the rounding process given the desired maximum RGA elements for any 2x2 sub-matrix in the final matrix.

3. The technique for calculating the logarithm base to be used in the rounding process given the desired maximum percentage change allowed for any value in each sub-matrix or in the overall matrix.

4. The technique for restoring collinear 2x2 sub-matrices that have been made non-collinear by the logarithmic rounding process.

5. The technique for forcing 2x2 sub-matrices in the final matrix to be either exactly collinear or non-collinear. These and other features are discussed below.

## BRIEF DESCRIPTION OF THE DRAWING

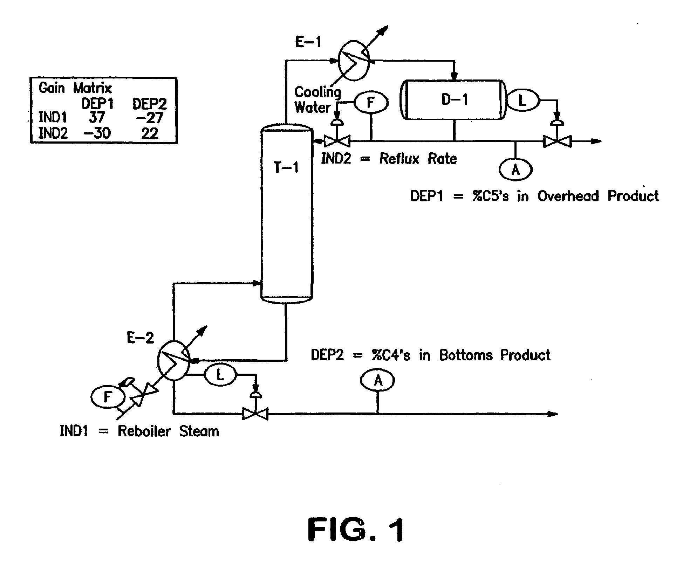

FIG. 1 is a flow diagram illustrating a simple distillation unit having two independent variables and two controlled variables.

## DETAILED DESCRIPTION OF THE PREFERRED EMBODIMENTS

A detailed description is demonstrated by an example problem. Consider a predictive model with 2 independent variables and 2 dependent variables. The gain matrix represents the interaction between both independent variables and both dependent variables. Table 1 shows an example of a 2x2 model prediction matrix.

A simple light ends distillation tower can be used as a process example for this problem. In this case, as shown in Fig. 1, IND1 is the reboiler steam input, IND2 is the reflux rate, DEP1 is the C5+ (pentane and heavier) concentration in the overhead product stream, and DEP2 is the C4- (butane and lighter) concentration in the bottoms product stream. In this example problem, the relative effects on the two product qualities are very similar, from a gain ratio perspective,

3

regardless of which independent variable is manipulated. When reboiler steam is increased, the C5's in the overhead increase, and the C4's in the bottoms product decrease. When the reflux rate is increased, the C5's in the overhead product decrease, but the C4's in the bottoms product increase. The two independent variables have similar, but opposite, effects on the two dependent variables.

The gain matrix represents the interaction between both independent variables and both dependent variables.

**TABLE 1**

|  | DEP1 (%C5+ Ovhd) | DEP2 (%C4- Btms) |
|---|---|---|
| IND1 (Reboiler Steam) | 37 | -27 |
| IND2 (Reflux Rate) | -30 | 22 |

The formula for Relative Gain Array is:

$$RGA(G) = Gx(G^{-1})^T \qquad (1)$$

If the RGA formula is applied to our example 2 x 2 problem, the result is the 2 x 2 array:

**TABLE 2**

| | |
|---|---|
| 203.5 | -202.5 |
| -202.5 | 203.5 |

These RGA elements have a very high magnitude, which is undesirable. If the maximum acceptable RGA element magnitude is chosen to be 18, for example, the following formula can be used to calculate the logarithm base that will be used to modify the matrix.

$$LOGBASE = \cfrac{1}{\left[1 - \cfrac{1}{MAX\_RGA}\right]} = \cfrac{1}{\left[1 - \cfrac{1}{18}\right]} = 1.0588235... \qquad (2)$$

For each gain in the original matrix, the logarithm of the absolute value of the number with the base chosen from above (1.0588235...) is calculated, resulting in the matrix given in Table 3.

**TABLE 3**

|  | DEP1 | DEP2 |
|---|---|---|
| IND1 | 63.17386488 | 57.66144728 |
| IND2 | 59.50475447 | 54.07852048 |

In the preferred embodiment, each of these numbers is rounded to the nearest integer. The formula provided in equation 2 applies to the case where the rounding desired is to the nearest whole number (integer). In the event that rounding is desired to the nearest single decimal (1/10), then multiply the LOGBASE calculated in equation 2 by 10. In the event that rounding is desired to the nearest two decimals (1/100), then multiply the LOGBASE calculated in equation 2 by 100. This method is applicable to any degree of decimal precision by simply mutiplying the LOGBASE calculated in equation 2 by the 10 raised to the power corresponding to the number of decimals desired. The resulting integer matrix is shown in Table 4.

**TABLE 4**

|  | DEP1 | DEP2 |
|---|---|---|
| IND1 | 63 | 58 |
| IND2 | 60 | 54 |

The gains are recalculated by taking the logarithm base from formula (2) to the integer powers shown in TABLE 4. Where the original gain was a negative number, the result is multiplied by -1. Applying these steps results in the modified gain matrix shown in Table 5.

**TABLE 5**

| | DEP1 | DEP2 |
|---|---|---|
| **IND1** | 36.63412093 | -27.52756876 |
| **IND2** | -30.86135736 | 21.90148291 |

If the RGA formula is applied to this matrix, the highest RGA element magnitude is equal to our desired maximum value shown in Table 6.

**TABLE 6**

| | |
|---|---|
| -17 | 18 |
| 18 | -17 |

The matrix modification process was able to do this by making relatively small changes in the original gain matrix. On a relative basis, the amount of gain change in each of the individual responses is shown in Table 7 below. This amount of change is normally well within the range of model accuracy.

**TABLE 7**

| | DEP1 | DEP2 |
|---|---|---|
| **IND1** | -0.99% | 1.95% |
| **IND2** | 2.87% | -0.45% |

In an alternative embodiment, the base logarithm number can be chosen based on the maximum desired gain change, in units of percentage, using the formula (3) below. For the example problem used above, a maximum gain change of approximately 2.9% results in the same logarithm base as chosen above.

$$LOGBASE = \left[ \frac{MAX\_CHNG}{100} + 1 \right]^2 \qquad (3)$$

In another alternative embodiment, the logged gains can be rounded to any fixed number of decimals for all matrix elements being operated on. For ease of use, it makes sense to choose a base logarithm where the desired results can be obtained from rounding the logged gains to an integer value. However equivalent results are obtained by rounding to any number of decimals if the base logarithm is adjusted. For example, if the base logarithm in the above example is chosen to be a power of ten greater than before,

$$LOGBASE = 1.0588235^{10} = 1.77107 \qquad (4)$$

an equivalent result will come from rounding the logarithms of the gains to the nearest tenth.

In another alternative embodiment, the rounded numbers can be chosen to enforce a desired collinearity condition. If the difference between the rounded logarithms of the gains for two independent variables is the same for two different dependent variables, then that 2 x2 sub-matrix is collinear. In other words, it is has a rank of one instead of two. The direction of rounding can be chosen to either enforce collinearity, or enforce non-collinearity. If the direction of rounding the logarithms of the gains from Table 3 is chosen to enforce collinearity, the integers could be chosen as shown in Table 8.

**TABLE 8**

| | DEP1 | DEP2 |
|---|---|---|
| **IND1** | 63 | 58 |
| **IND2** | 59 | 54 |

The resulting matrix obtained by recalculating the gains is of rank 1 as shown in Table 9.

**TABLE 9**

|  | DEP1 | DEP2 |
|---|---|---|
| **IND1** | 36.63412093 | -27.52756876 |
| **IND2** | -30.86135736 | 21.90148291 |

Included in the preferred embodiment is the application of the same algorithm to any gain multiplication factor used inside the predictive model. Often gain multiplication factors are used to modify the model in response to changing conditions. Choosing the gain multiplication factor to be a rounded power of the same base as the model, will guarantee that the gain multiplied model has the same overall RGA characteristics.

Included in the preferred embodiment is the application of the same algorithm to building block models that are used to construct the final predictive model. Often the final model is the result of some combination of building block models that do not exist in the final application. By applying this same process to these building block models, the final model will have the same RGA characteristics.

**Claims**

1. A computer program adapted to perform a method to modify a model gain matrix having at least one independent-dependent variable pair (IND 1, IND2, DEP 1, DEP2) that is used for a multivariate predictive control application applied to control a manufacturing process wherein the method that the computer program is adapted to perform comprises reading model gains for each independent-dependent variable pair (IND1, IND2, DEP 1, DEP2) **CHARACTERISED IN THAT** the method that the computer program is adapted to perform comprises:

   (a) choosing a logarithm base,
   (b) the reading of the model gains for each independent-dependent variable pair (IND1, IND2, DEP1, DEP2),
   (c) taking the logarithm of the absolute value of the gain for each independent-dependent variable pair (IND1, IND2, DEP1, DEP2) with the logarithm base chosen in step (a),
   (d) rounding the number from step (c) to a fixed number of decimals,
   (e) recalculating the gains by taking the logarithm base of step (a) raised to the power of the specified round-off from step (d),
   (f) multiplying the result of step (e) by -1 if the model gain was originally a negative number,
   (g) Applying these calculated gains to the model gain matrix.

2. The computer program of claim 1 wherein step (a) is performed by choosing a maximum allowable Relative Gain Array element, MAX_RGA, determined by the following formula:

$$LOGBASE = \cfrac{1}{\left[1 - \cfrac{1}{MAX\_RGA}\right]}$$

3. The computer program of claim 1 wherein step (a) is performed by choosing a maximum allowable percentage gain change, MAX_CHNG, determined by the following formula:

$$LOGBASE = \left[\frac{MAX\_CHNG}{100} + 1\right]^2$$

4. The computer program of claim 1 wherein the model gain matrix comprises 2 x 2 sub-matrices made up from two independent variable-dependent variable pairs and the direction of rounding performed in step (d) is chosen to force collinearity in the 2 x 2 sub-matrices.

5. The computer program of claim 1 wherein the model gain matrix comprises 2 x 2 sub-matrices made up from two independent variable-dependent variable pairs and the direction of rounding performed in step (d) is chosen to force non-collinearity in the 2 x 2 sub-matrices made up from two independent variable - dependent variable pairs.

6.   The computer program of claim 1 further applied to internal gain multiplication factors used to modify the model gains.

7.   The computer program of claim 1 further applied to building block models, which do not exist in the final model but are used to construct the final model.

8.   The computer program of claim 1 in which the model gain matrix is used as an input to a linear program.

9.   The computer program of claim 1 applied as a pre-processing step to multivariable predictive control calculations.

10.   The computer program of claim 1 applied as a pre-processing step to planning and scheduling calculations.

11.   The computer program of claim 1 where the rounding in step (d) is to zero decimals.

12.   The computer program of claim 1 , where the manufacturing process is at least one petroleum refinery process selected from the group of refinery distillation unit, chemical plant distillation unit, crude distillation unit, vacuum distillation unit, naphtha reformer, naphtha hydrotreater, gasoline hydrotreater, kerosene hydrotreater, diesel hydrotreater, gas oil hydrotreater, hydrocracker, delayed coker, Fluid Coker, Flexicoker, steam reformer, sulfur plant, sour water stripper, boiler, water treatment plant and combinations of the above.

**Patentansprüche**

1.   Computerprogramm, das angepasst ist, um ein Verfahren zur Modifikation einer Modellverstärkungsmatrix mit mindestens einem unabhängig-abhängig-Variablenpaar (IND1, IND2, DEP1, DEP2) auszuführen, das für eine multivariate prädiktive Steuerungsanwendung verwendet wird, die angewendet wird, um ein Herstellungsverfahren zu steuern, wobei das Verfahren, zu dessen Ausführung das Computerprogramm angepasst ist, aufweist, Modellverstärkungen für jedes unabhängig-abhängig-Variablenpaar (IND1, IND2, DEP1, DEP2) zu lesen,
**DADURCH GEKENNZEICHNET, DASS** das Verfahren, zu dessen Ausführung das Computerprogramm angepasst ist, aufweist:

(a) Wählen einer Logarithmenbasis,
(b) das Lesen der Modellverstärkungen für jedes unabhängig-ab-hängig-Variablenpaar (IND1, IND2, DEP1, DEP2),
(c) Bilden des Logarithmus des absoluten Wertes jeder Verstärkung für jedes unabhängig-abhängig-Variablenpaar (IND1, IND2, DEP1, DEP2) mit der in Schritt (a) gewählten Logarithmenbasis,
(d) Runden der Zahl aus Schritt (c) auf eine feste Nachkommastellenanzahl,
(e) Wiederberechnung der Verstärkungen, indem die Logarithmenbasis aus Schritt (a) potenziert mit der spezifizierten Rundung aus Schritt (d) genommen wird,
(f) Multiplizieren des Ergebnisses aus Schritt (e) mit -1, wenn die Modellverstärkung ursprünglich eine negative Zahl war,
(g) Anwenden dieser berechneten Verstärkungen auf die Modellverstärkungsmatrix.

2.   Computerprogramm nach Anspruch 1, bei dem Schritt (a) ausgeführt wird, indem ein maximal zulässiges Element, MAX_RGA, einer relativen Verstärkungsmatrix gewählt wird, das durch die folgende Formel bestimmt wird:

$$LOGBASE = \frac{1}{\left[1 - \dfrac{1}{MAX\_RGA}\right]}.$$

3.   Computerprogramm nach Anspruch 1, bei dem Schritt (a) ausgeführt wird, indem eine maximal zulässige prozentuale Verstärkungsänderung, MAX_CHNG, gewählt wird, die durch die folgende Formel bestimmt wird:

$$LOGBASE = \left[ \frac{MAX\_CHNG}{100} + 1 \right]^2 .$$

**4.** Computerprogramm nach Anspruch 1, bei dem die Modellverstärkungsmatrix 2x2-Untermatrizen aufweist, die aus zwei unabhängige-Variable-abhängige-Variable-Paaren gebildet sind, und die Richtung der in Schritt (d) ausgeführten Rundung gewählt wird, um in den 2x2-Untermatrizen Kolinearität zu erzwingen.

**5.** Computerprogramm nach Anspruch 1, bei dem die Modellverstärkungsmatrix 2x2-Untermatrizen aufweist, die aus zwei unabhängige-Variable-abhängige-Variable-Paaren gebildet sind, und die Richtung der in Schritt (d) ausgeführten Rundung gewählt wird, um in den 2x2-Untermatrizen, die aus zwei unabhängige-Variable-abhängige-Variable-Paaren gebildet sind, Nicht-Kolinearität zu erzwingen.

**6.** Computerprogramm nach Anspruch 1, das ferner auf interne Verstärkungsmultiplikationsfaktoren angewendet wird, um die Modellverstärkungen zu modifizieren.

**7.** Computerprogramm nach Anspruch 1, das ferner auf modulare Modelle angewendet wird, die in dem endgültigen Modell nicht existieren, aber verwendet werden, um das endgültige Moduell zu konstruieren.

**8.** Computerprogramm nach Anspruch 1, bei dem die Modellverstärkungsmatrix als eine Eingabe für ein lineares Programm verwendet wird.

**9.** Computerprogramm nach Anspruch 1, das als ein Vorverarbeitungsschritt für prädiktive Mehrgrößensteuerungsberechnungen angewendet wird.

**10.** Computerprogramm nach Anspruch 1, das als ein Vorverarbeitungsschritt für Planungs- und Vorbereitungsberechnungen angewendet wird.

**11.** Computerprogramm nach Anspruch 1, bei dem die Rundung in Schritt (d) auf Null Nachkommastellen stattfindet.

**12.** Computerprogramm nach Anspruch 1, bei dem das Herstellungsverfahren mindestens ein Erdölraffinerieverfahren ist, das aus der Gruppe von Raffineriedestillationseinheit, Chemieanlagendestillationseinheit, Rohöldestillationseinheit, Vakuumdestillationseinheit, Naphthareformieranlage, Naphthahydrotreatinganlage, Benzinhydrotreatinganlage, Kerosinhydrotreatinganlage, Dieselhydrotreatinganlage, Gasölhydrotreatinganlage, Hydrocrackanlage, Delayed-Coker-Anlage, Fluid-Coker-Anlage, Flexicoker-Anlage, Spaltrohranlage, Schwefelanlage, Sauerwasserstripper, Destillationsanlage, Wasseraufbereitungs anlage und Kombinationen davon ausgewählt ist.

## Revendications

**1.** Programme informatique prévu pour réaliser un procédé afin de modifier une matrice de gain du modèle comportant au moins une paire de variables indépendante-dépendante (IND1, IND2, DEP1, DEP2) qui est utilisée pour une application de régulation prédictive multivariée appliquée en vue de réguler un processus de fabrication, le procédé que le programme informatique est prévu pour réaliser comportant les étapes consistant à lire des gains du modèle pour chaque paire de variables indépendante-dépendante (IND1, IND2, DEP1, DEP2)
**caractérisé en ce que** le procédé que le programme informatique est prévu pour réaliser comporte les étapes consistant à :

(a) choisir une base de logarithme,
(b) lire les gains du modèle pour chaque paire de variables indépendante-dépendante (IND1, IND2, DEP1, DEP2),
(c) prendre le logarithme de la valeur absolue du gain pour chaque paire de variables indépendante-dépendante (IND1, IND2, DEP1, DEP2) avec la base de logarithme choisie à l'étape (a),
(d) arrondir le nombre issu de l'étape (c) à un nombre fixé de décimales,
(e) recalculer les gains en prenant la base de logarithme de l'étape (a) élevée à la puissance de l'arrondi spécifié de l'étape (d),
(f) multiplier le résultat de l'étape (e) par -1 si le gain du modèle était à l'origine un nombre négatif,

(g) appliquer ces gains calculés à la matrice de gain du modèle.

**2.** Programme informatique selon la revendication 1, l'étape (a) étant réalisée en choisissant un élément maximal admissible de tableau de gain relatif, MAX_RGA, déterminé par la formule suivante :

$$LOGBASE = \frac{1}{\left[1 - \frac{1}{MAX\_RGA}\right]}$$

**3.** Programme informatique selon la revendication 1, l'étape (a) étant réalisée en choisissant un changement maximal admissible du gain en pourcentage, MAX_CHNG, déterminé par la formule suivante :

$$LOGBASE = \left[\frac{MAX\_CHNG}{100} + 1\right]^2$$

**4.** Programme informatique selon la revendication 1, la matrice de gain du modèle comportant 2 x 2 sous-matrices constituée de deux paires variable indépendante-variable dépendante et le sens de l'arrondi effectué à l'étape (d) étant choisi pour imposer la colinéarité des 2 x 2 sous-matrices.

**5.** Programme informatique selon la revendication 1, la matrice de gain du modèle comportant 2 x 2 sous-matrices constituée de deux paires variable indépendante-variable dépendante et le sens de l'arrondi effectué à l'étape (d) étant choisi pour imposer la non-colinéarité des 2 x 2 sous-matrices constituées de deux paires variable indépendante-variable dépendante.

**6.** Programme informatique selon la revendication 1, appliqué en outre à des facteurs multiplicateurs de gain interne utilisés pour modifier les gains du modèle.

**7.** Programme informatique selon la revendication 1, appliqué en outre à des modèles modulaires à assembler, qui n'existent pas dans le modèle final mais sont utilisés pour construire le modèle final.

**8.** Programme informatique selon la revendication 1, dans lequel la matrice de gain du modèle est utilisée en tant qu'entrée d'un programme linéaire.

**9.** Programme informatique selon la revendication 1, appliqué en tant qu'étape de prétraitement pour des calculs de régulation prédictive multivariée.

**10.** Programme informatique selon la revendication 1, appliqué en tant qu'étape de prétraitement pour des calculs de planification et d'ordonnancement.

**11.** Programme informatique selon la revendication 1, l'arrondi à l'étape (d) se faisant jusqu'à zéro décimale.

**12.** Programme informatique selon la revendication 1, le processus de fabrication étant au moins un processus de raffinerie de pétrole choisi dans le groupe constitué d'une unité de distillation de raffinerie, d'une unité de distillation d'usine chimique, d'une unité de distillation de brut, d'une unité de distillation sous vide, d'un reformeur de naphte, d'une installation d'hydrotraitement de naphte, d'une installation d'hydrotraitement d'essence, d'une installation d'hydrotraitement de kérosène, d'une installation d'hydrotraitement de diesel, d'une installation d'hydrotraitement de gas-oil, d'une installation d'hydrocraquage, d'une unité de cokéfaction différée, d'une unité de cokéfaction fluide, d'une unité de flexicoking, d'un reformeur à vapeur, d'une usine de récupération du soufre, d'un éliminateur d'eau acide, d'une chaudière, d'une usine de traitement d'eau et de combinaisons de ceux-ci.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4349869 A
- US 5351184 A
- US 6381505 B
- WO 2004086155 A